(19) Europäisches Patentamt

European Patent Office

Office européen des brevets

(11) EP 0 926 113 A1

(12) EUROPEAN PATENT APPLICATION

(43) Date of publication:
30.06.1999 Bulletin 1999/26

(51) Int. Cl.⁶: **C05F 11/10**, C05D 9/02,
C05F 11/02

(21) Application number: 98403287.0

(22) Date of filing: 23.12.1998

(84) Designated Contracting States:
AT BE CH CY DE DK ES FI FR GB GR IE IT LI LU
MC NL PT SE
Designated Extension States:
AL LT LV MK RO SI

(30) Priority: 24.12.1997 PH 5896097

(71) Applicant: Dizon, Dante C.
Muntinlupa City, Metro Manila (PH)

(72) Inventor: Dizon, Dante C.
Muntinlupa City, Metro Manila (PH)

(74) Representative: Breese, Pierre
Breese - Majerowicz
3, avenue de l'Opéra
75001 Paris (FR)

(54) **Biostimulant type fertilizer for various crops and method of use thereof**

(57)    A biostimulant fertilizer composition of a two-component system in granular, powder and liquid form, when combined with inorganic fertilizer, produces a substantial increase in yield for various crops and resistance to diseases and stress due to temperature, water, wind and pests. A reduced amount of inorganic fertilizer input is disclosed. The system comprises of a foliar fertilizer component and a soil-conditioning component. For perennial crops, the soil-conditioning component is applied first by spraying or broadcasting during the onset and after the rainy season. It can also be used as drenching water after the application of inorganic fertilizer for the said crops. For short term crops, it is applied during the last leveling or harrowing. There is a soil incorporation before the soil is treated with inorganic fertilizer. The foliar component is given one, two or more applications, depending on crops. For short term crops, it is given first, 20-40 days after transplanting or sowing. The second application is optional, and applied 20-45 days after the first application. For perennial crops, first application is during the first bloom. Second application is 20-45 days after the first application, or every after harvest.

EP 0 926 113 A1

## Description

Field of Invention

The present invention relates to a biostimulant fertilizer composition comprising of a two-component system, which when combined with inorganic fertilizer, produces a substantial increase in yield and resistance to diseases and stress due to temperature, water, wind and pests. The system comprises of a foliar fertilizer component and a soil-conditioning component. The soil-conditioning component is applied either by spray or broadcast during the last leveling or harrowing for short-term crops. For perennial crops, it can be sprayed or broadcast on soil during the onset and after the rainy season. The foliar component can be applied 2-40 days after transplanting or sowing, and can be given during the first bloom, and must be repeated every 20-45 days or after every harvest.

Description of Prior Art

The response of high-yielding varieties of rice, corn, soya, vegetables and perennial crops to traditional inorganic fertilizer has been showing a diminishing trend. This was caused by overuse of inorganic fertilizers. As a result, the soil's physical, chemical and microbiological properties are deteriorated. No amount of inorganic fertilizer could increase productivity of the soil which become acidic due to overuse of synthetic fertilizer Popular effects because their effects can be readily seen by farmers with little input plus the basal application of inorganic fertilizer.

Application of foliar fertilizers somehow supplements the inorganic fertilizer inputs applied to crops because the latter is not efficient enough to supply the much-needed nutrients to the plants.

Foliar fertilizers in the market today come in two grades: liquid-based and granular-based foliar. Both are comprised mainly of water-soluble nitrogen, phosphorous and pottassium known as NPK, with trace elements and biostimulants, both mainly from carageenan. However, trace elements are not enough to be ver effective.

About 80% of granular foliar fertilizers available in the market are imported. They come in bulk and are repacked locally: these fertilizers comprise mainly of water-soluble NPK plus trace micronutrients such as magnesium, copper, cobalt, molybdenum, sulfur, zinc, iron, etc. The remaining supplies are compounded locally:

Application of these foliar fertilizers for short-term crops usually are as follows: one kilogram of granular foliar fertilizer is applies per hectare. This is dissolved in water, and the solution is applied by spraying 25 days after transplanting or sowing, and every week there after up to six (6) to eight (8) applications during a cycle.

This practice requires as much as up to eight (8) kilograms of foliar fertilizer per hectare per cycle. Such a practice is very labor-intensive, considering eight (8) applications per cycle and the maximum increase in yield is only up to 5% to 10% without reduction of inorganic fertilizer inputs. For perennial crops, first spray application is during the first bloom and thereafter every one to two weeks.

Recently, our Department of Agriculture studies, showed that there was massive deterioration of our agricultural soil condition, mainly due to oversue of NPK; so much so that it initiated the use manure-based organic fertilizer to correct the soil condition.

In 1994, our government subsidized indigenous organic matter to rice farmers throughout the country, amounting to Php 100 million. About 40 members of organic fertilizer suppliers were organized using mainly limited inputs of chicken dung. The use of chicken dung as organic fertilizer has proved itself beneficial in combination with inorganic fertilizer inputs, but its use has its share of problems and drawbacks.

The biggest problem of chicken dung-based organic fertilizer is supply. The biggest end-users of chicken dung are the fishpond industries and the vegetable growers in growers, only less than four (1) percent of the total demand of the rice industry alone can be satisfied.

Due to scarcity of chicken dung, most organic farm suppliers were forced to adulterate their supplies by adding soil, raw chicken dung and urea, which gave them a bad reputation among rice farmers.

Another drawback of using chicken dung is the cost of labor. One needs two to four man-days to apply two and three tons of raw chicken dung or 800 to 1,500 kilograms of enzyme — treated chicken dung organic fertilizer per hectare of riceland or other cops.

Zero tillage is becoming popular in upland rice, where water is always a problem. In those area where the topography is irregular, it is very difficult to cultivate the soil. In addition to this, the cost of labor is ever-increasing and very few young people are willing to work in the fields. Zero tillage is being developed by chemical giant Monsanto. Broad spectrum herbicide is applied in the rice or corn field just harvested from. After two weeks, rice and corn silage is decomposed, and at this stage, corn or rice seedlings are broadcast, and will germinate with the absence of grasses. The usual fertilizers and pest control is applied. The drawback of this system is that soil is compact, therefore, tilling cannot be maximized because the soil structure is poor compared to normal cultivation practice. Therefore, the yield is always 10-25% lower than normal practice.

Normal inorganic NPK sold commercially in the market does not contain any trace elements nor organic matter, and the latter is applied in big quantities mainly from manure long before the land preparation, to assure minimum phtytotoxicity problem. It comes in different grades, like 45-0-0, 14-14-14, 16-20-0, 0-0-60 and 25-0-0.

With the present rice and corn shortage we are experiencing in our country, coupled with the above-mentioned problems in the rice and corn industries and the El Nino phenomenon, there is a great need for a solution that will effectively address our present food security problem.

Summary of the Invention

The present invention provides a biostimulant fertilizer composition in granular, powder and liquid form, comprising of a two-component system which, when combined with substantially reduced inorganic fertilizer input from 25-50% produces a surprising conditioner.

The foliar component comprises about 0-96% by weight NPK and 100-4% growth regulator, like humic acid or amino acids or gibberelic acid or alphanaphthoxyacetic acid or beta nahthoxyacetic acid or cytkinin or triacontanol or combinations of the said growth regulators. Between 5-10% of mixed micronutrients are added to the said mixture of NPK and growth regulator.

The soil conditioning compound comprises from 100% humic acid and zero percent micronutrients, to 60% humic acid and 40% mixed micronutrients. About 2-7% by wight condensation product of aromatic sulofonic acid or srufactant is added to the mixture of humic acid and mixed micronutrients.

With this foliar and soil conditioning fertilizer system, surprising results were obtained solving various problems inherent in the prior art.

The present invention also provides a method of using and applying the present foliar and soil conditioning fertilizer system which comprises the steps of:

a) Applying 200 to 25,000 grams per hectare of soil-conditioning component either by spray or broadcast of granuyles application with inorganic fertilizer on the soil prior to the last land preparation for short-term crops. For perennial crops, the soil conditioner is dissolved in water and used as a drenching medium after the application of reduced inorganic fertilizer before and after the rainy season.

b) Spraying in one or more separate applications, one after 2-40 days after transplanting or sowing. This is repeated after every 2-45 days after the first spray for short term crops.

c) For perennial crops, the first spray is done after the sign of first bloom, and repeated after 20-45 days or after every harvest.

Detailed Description of the Invention

The present invention system, and its applications were developed to increase the yield by bringing back the soil's condition to its normal reversible states, and reducing the use of inorganic fertilizer input by as much as $\frac{3}{4}$ to $\frac{1}{2}$ of farmer's practice.

The combination of humic acid and surfactant surprisingly makes the soil friable, checking compactness, improving aeration, water holding capacity and drainage of the cells which improved the uptake of nutrients by the plant and the surfactant further decreases the surface tension.

Leaching is likewise reduced due to the said improved cation-exchange capacity of the soil.

A novel feature of the present invention is the direct application of micronutrients, including the presence of micronutrients in the humic acid itself, to the soil. The combination of humic acid and surfactant ensures that these elements, including macroelements like nitrogen, phosphorous, potassium, and calcium are made available to the plant when needed, especially during the states of stress like the unavailability of water, abrupt temperature changes, strong winds, typhoon, and the attack of pets and diseases.

The foliar fertilizer component which contains growth regulator, also enlarges plant cells, further improves nutrient uptake, as well as supplies instantly the much-needed macroelements, like nitrogen, phosphorous and potassium and microelements. This requires a minimal amount of foliar fertilizer per cycle as compared to six to eight applications per cycle of prior act.

When the foliar component is applied according to the inventive method, the following are accomplished:

a) the nutrients are readily available to the plant.

b) Direct plant growth stimulation is affected by providing controlled release of auxins, amino acids and inorganic phospahate which results to faster growth.

c) Additional micronutrients provided trigger plant growth.

d) Improved root development helps the plant absorb more nutrients.

3

e) Stimulation of the microflora improves the soil.

f) Increased cell membrane permeability improves the uptake of nutrients.

During our series of bioefficacy trials on different crops in various parts of the country, we observed that there is a wide variance in terms of state of the soil's chemical, typical conditions:

a) Upland - There is very low organic matter, soil is compact, pH is acidic due to the presence of pyrites.

b) Lowland - there is sufficient organic matter, however, phosphorous, potassium and some micronutrients are fixed to the soil, and the pH is quite acidic.

In the upland area, water is always a problem because farmers depend on the rainfall. As a result, farmers tend not to invest heavily on inputs. In the lowland areas, some of the nutrients are fixed in the soil, and nitrogen is leached.

It is necessary to ensure maximum return of input, and the fertilizer should contain optimum components and combination that will take care of the various following variables.

Low cationic exchange capacity, low micronutrients, fixed nutrients, low organic matter, which will result to poor root development, low uptake of nutrients, and lack of essential nutrients for growth and development. The end result will be lower yield, and poor resistance to pest, diseases, and water and temperature stresses.

When soil conditioner is tank-mixed with glyphosphate isopropylamine ( a broad spectrum herbicide), the said soil conditioner will improve the bioefficacy of the latter. Also, it will improve the soil's physical, chemical and microbiological properties in terms of aeration, decreased soil compactness, improved root development and improved cationic exchange capacity, which will release the soil-bound phosphorous, potassium and some micronutrients. The application of foliar fertilizer during panicle initiation and soil dough state will give instant macro and micronutrients to the plants for proper growth and development. The said biostimulant will enhance zero tillage technology.

Addition of humic acid, microelements and surfactant in any inorganic fertilizers during the granulation process in manufacturing will improve their effect geometrically. The advantage is that it is easy to use since it is all-in-one. This will eliminate mistakes on the part of the farmers, and will reduce the cost of handling and application. Incorporation of the biostimulant during granulation of inorganic fertilizer will enhance the bioefficacy of inorganic fertilizers at lesser cost and effort.

A more complete understanding of the present invention can be obtained by referring to the following actual test conducted in various areas in the country, wherein soil, crops, farmer's practice, rainfall patterns and geographic conditions are different.

Trial Group No. 1

Location:        Sta. Rita, Pampanga
Soil Condition:  Top Soil with Lahar, low organic matter, very sandy, with irrigation system
Crop:            Rice

|  | Yield ton/ha |
|---|---|
| 1. Farmer's Practice | 4.00 |
| 6 bags 14-14-14 | |
| 3 bags urea | |
| 2. 6 bags 14-14-14 | 5.10 |
| 3 bags urea | |
| 25.0 kg. Soil Conditioner A | |
| 2.0 li. Foliar A at Panicle Initiation (PI) | |
| 2.0 li Foliar A at Soil dough Stage (SDS) | |

(continued)

|  | Yield ton/ha |
|---|---|
| 3. 5 bags 14-14-14 | 4.87 |
| 2 bags urea | |
| 25.0 kg soil conditioner A | |
| 2.0 li. Foliar A at PI | |
| 2.0 li. Foliar A at SDS | |
| 4. 5 bags 14-14-14 | 5.02 |
| 2 bags urea | |
| 25.0 kg soil conditioner A | |
| 2.0 li. Foliar A at PI | |
| 2.0 li. Foliar A at SDS | |
| 5. 5 bags 14-14-14 | 5.25 |
| 2 bags urea | |
| 25.0 kg soil conditioner A | |
| 2.0 li. Foliar A at PI | |
| 2.0 li. Foliar A at SDS | |
| 6. 5 bags 14-14-14 | 5.50 |
| 2 bags urea | |
| 25.0 kg soil conditioner A | |
| 1.0 kg. Foliar B at PI | |
| 1.0 kg. Foliar B at SDS | |
| 7. 5 bags 14-14-14 | 4.95 |
| 2 bags urea | |
| 25.0 kg soil conditioner A | |
| 1.0 kg. Foliar B at PI | |
| 1.0 kg. Foliar B at SDS | |
| 8. 5 bags 14-14-14 | 5.36 |
| 2 bags urea | |
| 25.0 kg soil conditioner A | |
| 1.0 kg. Foliar B at PI | |
| 1.0 kg. Foliar B at SDS | |

| Soil Conditioner composition A | Parts |
|---|---|
| 80% Humic Acid reonardite type, granules (HAL) | 3.72 |
| Mixed Micronutrients, chelated with EDTA and HEDTA (MMC) | 5.58 |
| Aromatic Sulfonic Acid (ASA) | 0.70 |
| Diatomaceous Earth (DE), as filler | 90.00 |
|  | 100.00 |
| MM | 1.47 |
| ASA | 0.20 |
| DE | 90.00 |
|  | 100.00 |

| Soil Conditioner Composition C | Parts |
|---|---|
| 30% Humic Acid, leonardite | 9.30 |
| ASA | 0.70 |
| DE | 90.00 |
|  | 100.00 |

| Foliar Composition A, liquid | Parts |
|---|---|
| 80% Humic Acid | 4.75 |
| NPK 6-16-4 | 0.00 |
| Mixed Micronutrients chelated with EDTA, HEDTA and phenolic acid | 0.25 |
| Water | 95.00 |
|  | 100.00 |

| Foliar composition B, powder | Parts |
|---|---|
| 80% Humic Acid | 3.6 |
| NPK 6-16-4 | 86.4 |
| Mixed Micronutrients, chelated with phenolic acid | 10.00 |
|  | 100.00 |

Trial Group No. II

Location:        Maligaya, Nueva Ecija
Soil Condition:  loamy, high organic matter, excellent irrigation system
Crop:            rice

|  | Yield kg/ha |
|---|---|
| 1. Framer's Practice | 6.17 |
| 5 bags 14-14-14 |  |
| 3 bags urea |  |
| 2. ½ Farmer's Practice | 2.98 |

(continued)

|  | Yield kg/ha |
| --- | --- |
| 3. ¾ Farmer's Practice | 3.76 |
| 4. Farmer's Practice + 200 grams Soil Conditioner A | 8.01 |
| 100 ml Foliar 1 at PI | |
| 100 ml Foliar at SDS | |
| 5. Farmer's practice + 200 grams Soil Conditioner B | 8.43 |
| 100 ml Foliar 1 at PI | |
| 100 ml Foliar at SDS | |
| 6. ½ Farmer's Practice + 200 grams Soil Conditioner A | 6.88 |
| 100 ml Foliar 1 at PI | |
| 100 ml Foliar at SDS | |
| 7. 3/4 Farmer's Practice + 200 grams Soil Conditioner A | 7.39 |
| 100 ml Foliar 1 at PI | |
| 100 ml Foliar at SDS | |
| 8 1/2 Farmer's Practice + 200 grams Soil Conditioner A | 6.99 |
| 250 ml Foliar 2 at PI | |
| 250 ml Foliar 2 at SDS | |
| 9. 3/4 Farmer's Practice + 200 grams Soil Conditioner A | 7.55 |
| 250 ml Foliar 2 at PI | |
| 250 ml Foliar 2 at SDS | |

| Soil Conditioner Composition | Parts |
|---|---|
| 80% Humic Acid | 98.0 |
| ASA | 2.0 |
| | 100.00 |
| Composition of Soil Conditioner B | |
| 80% Humic Acid | 90.0 |
| chelated with citric acid | 0.8 |
| ASA | 2.0 |
| | 100.00 |
| Composition of Foliar 1 | |
| Active Ingredients: | |
| Triacontanol | 24-26% |
| Phytosterol | 17.24% |
| Inerts and Adjuvant | 59-50% |
| | 100.0 % |
| Composition of Foliar 2 | |
| Active Ingredients: | |
| Alpha-naphthoxyacetic acid | 0.5% |
| Beta-naphthoxyacetic acid | 1.8% |
| Napthaleneacetamide | 1.5% |
| Inerts and adjuvants | 96.2% |
| | 100.00% |

TRIAL GROUP NO. III

Location:         Guagua, Pampanga
Type of Soil:     loamy, medium organic matter
Crop:             Rice

| | Yield kg/ha |
|---|---|
| 1. Trial No. 1 | 4.78 |
| Farmer's Practice: 4bags 14-14-14 | |
| 2 bags Urea | |
| 2. ¾ Farmer's Practice | 3.57 |
| 3. ¾ Farmer's Practice + soil conditioner A | 4.46 |
| 4. ¾ Farmer's Practice + Agrispon 1 li/HA, foliar | 4.85 |
| 5. Farmer's Practice + Soil Conditioner A at 3500 grams | 4.87 |
| + 1 li/HA Agrispon at PI | |

(continued)

|  | Yield kg/ha |
|---|---|
| 6. Farmer's Practice + 3500 grams Soil Conditioner A (Zero Tillage) | 4.74 |
| + 5 li Glyhphosphate ispropylamine tankmix |  |
| 1 li/HA Agrispon at PI |  |
| 7. ¾ Farmer's Practice (zero tillage) | 4.07 |
| + 5 li/HA Glyphosphate isopropylamine |  |
| 1 li/HA Agrispon at PI |  |

| Composition of Soil Conditioner A | Parts |
|---|---|
| 15% of Peat Activated humic acid | 80.0 |
| Mixed Micronutrients, chelated with EDTA | 18.0 |
| ASA | 2.0 |
|  | 100.0 |
| Composition of Agrispon |  |
| Cytokinin, RNA, DNA | 0.3 |
| Mineral Water | 97.7 |
|  | 100.00 |

TRIAL GROUP NO. IV

Location:        Carcar, Cebu
Type of Soil   : Upland, very low organic matter, sandy type
Crop:             Hybrid corn

|  | Yield kg/ha |
|---|---|
| 1. Farmer's Practice | 4140 |
| 4 bags 14-14-14 |  |
| 2 bags urea |  |
| 2 bags 16-20-0 |  |
| 2. Farmer's practice + 650 grams/HA Soil Conditioner | 5075 |
| + 1 li/HA, 30 days after sowing (DAS) |  |
| Foliar |  |
| 3. Farmer's Practice + 650 grams /HA Soil Conditioner | 5280 |
| + 1 li/HA Foliar after 20 days |  |
| + 1 li/HA Foliar after 40 days |  |

| Soil Conditioner Composition | Parts |
|---|---|
| Humic acid | 62.0 |
| Mixed micronutrients chelated | 35.0 |
| ASA | 3.0 |
| | 100.00 |
| Foliar Fertilizer Composition | % |
| Humic acid | 2.0 |
| Mixed micronutrients chelated | 7.0 |
| NPK | 10-12-10 |

TRIAL GROUP NO V

Location:     Urdaneta, Pangasinan
Type of Soil:    Upland, sandy-loam
Crop:        Monngo Bean

| | Yield kg/ha |
|---|---|
| 1. Farmer's Practice 50 kg 14-14-14 after harvest of riced | 1750 |
| 2. Farmer's Practice + 650 grams Soil Conditioner | 2059 |
| 3. Farmer's Practice + 1 li/HA Foliar 30 days after sowing | 1900 |
| 4. Farmer's Practice + 650 grams Soil Conditioner + 1 li/HA Foliar 30 days after sowing | 2200 |

| Soil Conditioner Composition | Parts |
|---|---|
| Humic acid | 62.0 |
| Mixed micronutrients cheated | 35.0 |
| ASA | 3.0 |
| | 100.0 |
| Foliar Fertilizer Composition | % |
| humic acid | 2.0 |
| mixed micronutrients | 7.0 |
| NPK | 10-12-10 |

Trial Group No. VI

Location:        Guagua, Pampanga
Type of Soil:    loamy, moderate organic matter
Crop:            Ampalaya (bitter gourd)

|  | Yield kg/1000m2 per harvest |
|---|---|
| 1. Farmer's Practice | 154 |
| 20 bags organic fertilizer from chicken dung | |
| - basal 14-14-14 is applied every 2 weeks at 2 bags/HA | |
| - Foliar spray is used with Crop Giant 19-19-19 + ME at 1 li/HA every 2 weeks during production stage | |
| 2. Framer's Practice + 650 grams/HA Soil Conditioner | 195 |
| Before last land preparation | |
| - Foliar spray is used at 1 li/HA every 2 weeks during the production stage | |
| Note: Production stage is extended by six (6) weeks | |

| Soil Conditioner Composition | Parts |
|---|---|
| Humic acid | 62.0 |
| Mixed micronutrients chelated | 35.0 |
| ASA | 3.0 |
| | 100.0 |
| Foliar Fertilizer Composition | % |
| humic acid | 2.0 |
| mixed micronutrients | 7.0 |
| 10-12-10 NPK | |

TRIAL GROUP NO. VII

Location:        La Trinidad, Benguet
Type of Soil:    very high organic matter
Crop:            Cabbage

| | Yield kg/ha |
|---|---|
| 1. Farmer's Practice | 35,000 |
| 10 bags 14-14-14 | |
| 10 bags 45-0-0 | |
| 10mt raw chicken dung | |
| Crop Giant Foliar Spray is used in eight (8) applications a 1 li/HA during the whole cycle | |
| 2. Foliar Spray is used at 1 liter/HA in four (40 applications + FP during the whole cycle | |
| Foliar Spray Composition | |
| | % |
| humic acid | 2.0 |
| mixed micronutrients | 7.0 |
| 10-12-10 NPK | |

TRIAL GROUP NO. VIII

Location:        Lubao, Pampanga
Type of Soil:    :Loamy, poor organic matter
Crop:            Rice

| | Yield tons/ha |
|---|---|
| 1. Farmer's Practice | 4.78 |
| 4 bags 14-14-14 | |
| 2 bags urea | |
| 2. 300 kg Premix NPK | 5.67 |
| plus Biostimulant 1 | |
| 3. 300 kg Premix NPK | 5.88 |
| plus Biostimulant 2 | |
| Premix #1 Composition | |
| NPK 75-28-28 | |
| Plus 0.25% of 89% | |
| Humic acid plus 0.08% micronutrient mix chelated with EDTA and HEDTA | |
| Premix #2 Composition | |
| NPK 75-28-28 plus | |
| 0.5% OF 80% humic acid plus | |
| 0.08% micronutrient mix cheated with EDTA and HEDTA | |

TRIAL NO. IX

Location: Dasmarinas, Cavite
Type of Soil: Loamy
Crop: Mango

Six (6) identical size centinial mango divided into two groups, as A and B. A for farmers practice and B for experimental.

A. FARMERS PRACTICE
Before onset of rainy season, mid May, 10kg /tree of 14-14-NPK, added around about 1.5 meter radius around from the trunk and soil incorporated and drenched with water.
Potassium nitrate solution sprayed when leaves are brittle. When fruits are pea size 1.0 kg/200 li solution Crop Giant Foliar sprayed with normal fungicide, foliar spray with Crop giant sprayed after 2 weeks interval for total of three (3) sprays.
B. EPERIMENTAL
Before onset of rainy season 10 kg /tree if 14-14-14 NPK added similar to farmers practice, except about 5 grams of Soil Conditioner per 20 li of solution added as drenching water after application of NPK.
Potassium nitrate solution sprayed when leaves are brittle, similar to farmers practice is used on foliar spray, except we use our foliar spray at similar rate and cycle.

| SOIL CONDITIONER COMPOSITION | PARTS |
|---|---|
| Humic Acid | 62.0 |
| Mixed Chelated micronutrients | 35.0 |
| ASA | 3.0 |
| | 100.0 |

| FOLIAR FERTILIZER COMPOSITION | PARTS |
|---|---|
| Humic Acid | 2.0 |
| Mixed Micronutrients | 7.0 |
| NPK | 10-12-10 |

RESULT AND OBSERVATION

Experimental tree leaves look more healthy, fruit setting, more numerous and vigorous. Sizes of fruits are bigger. Unfortunately, no scientific data was generated, because when we send our representative they were already harvested and our farmers cooperator claim he got a total of 85 Kaings for farmers practice and 105 Kaings for our experimental trials. About 30kg per kaing.

**Claims**

1. A biostimulant fertilizer in granular, powder or liquid form comprising of a foliar fertilizer and a soil —conditioning component wherein the foliar component fertilizer comprises about 0-96% NPK by weight to 100-4% by weight growth promoter like humic acid or amino acid or gibberetic acid or alpha-naphthoxyacetic acid or betanaphthoxyacetic acid or cytokinin or triachontanol or a combination among the mentioned growth promoters; 5-15% by weight mixed micronutrients against the said combination of NPK plus growth promoter; and wherein the soil-conditioning component comprises from 100% humic acid and zero % micronutrients, to 60% humic plus 40% mixed micronutrients; and about 2-7% by weight of condensation product of aromatic sulfonic acid as surfactant added to mixture of humic acid and mixed micronutrients.

2. A method of using biostimulant composition of claim, which comprises the steps of:

a. Applying between 200 to 25,000 grams/HA per application of the soil-conditioning component by spraying or broadcasting into the soil before the last land preparation for short-term crops; for perennial crops, byh applying into the soil before and after the rainy season, dissolving in water and used as drenching medium after application of reduced inorganic NPK;

b. Applying by foliar spray 100 ml to 2000 ml per hectare for short-term crops, the first application being applied 20-40 days after transplanting or sowing, and second application optionally being applied to 20 to 45 days after the first application, and for perennial crops, first application being applied after the first sign of bloom, and second application 20-45 days after the first application or after every harvest.

3. The composition of the foliar fertilizer component according to claim 1.

4. The composition of the soil conditioning component according to claim 1.

European Patent Office

**EUROPEAN SEARCH REPORT**

Application Number

EP 98 40 3287

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | FR 2 383 146 A (RODRIGUES CORREIA ZULMIRA) 6 October 1978 | 3 | C05F11/10 C05D9/02 C05F11/02 |
| A | * claims * <br> * page 8, line 31 - page 14, line 30 * <br> --- | 1,2,4 | |
| X | EP 0 284 339 A (ACTAGRO INC) 28 September 1988 | 3 | |
| A | * claims * <br> * page 3, line 31 - page 7, line 28 * <br> --- | 1,2,4 | |
| A | DATABASE WPI <br> Section Ch, Week 9514 <br> Derwent Publications Ltd., London, GB; <br> Class C04, AN 95-102167 <br> XP002097561 <br> & JP 07 026260 A (MITSUI CONSTR CO LTD) <br> , 27 January 1995 <br> * abstract * <br> ----- | 1-4 | |

**TECHNICAL FIELDS SEARCHED (Int.Cl.6)**

C05F
C05D

The present search report has been drawn up for all claims

| Place of search | Date of completion of the search | Examiner |
|---|---|---|
| THE HAGUE | 23 March 1999 | RODRIGUEZ FONTAO, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**          EP 98 40 3287

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-1999

| Patent document cited in search report | | Publication date | Patent family member(s) | | Publication date |
|---|---|---|---|---|---|
| FR 2383146 | A | 06-10-1978 | NONE | | |
| EP 0284339 | A | 28-09-1988 | US | 4786307 A | 22-11-1988 |
| | | | AU | 603877 B | 29-11-1990 |
| | | | AU | 1335088 A | 22-09-1988 |
| | | | CA | 1313592 A | 16-02-1993 |
| | | | GR | 3002289 T | 30-12-1992 |